# EUROPEAN PATENT APPLICATION

(11) **EP 4 194 514 A1**
(43) Date of publication of application: **14.06.2023**
(21) Application number: 21854300.7
(22) Date of filing: 03.08.2021
(51) Int. Cl.: C09D 5/00, C09D 5/02, C09D 201/00, C09D 7/61, C09D 7/65

(54) **ANCHOR COATING MATERIAL AND METHOD FOR PRODUCING FLEXOGRAPHICALLY PRINTED MATTER USING SAME**

(30) Priority: 06.08.2020 JP 2020134191
(71) Applicant: Sakata INX Corp., Osaka-shi, Osaka 550-0002 (JP); Rengo Co., Ltd., Osaka-shi Osaka 553-0007 (JP)
(72) Inventor: FUJITA, Atsushi, Osaka-shi, Osaka 550-0002 (JP); ASADA, Naoya, Osaka-shi, Osaka 550-0002 (JP); ITO, Genta, Osaka-shi, Osaka 550-0002 (JP); SAKEMOTO, Ryu, Osaka-shi, Osaka 550-0002 (JP)
(74) Representative: Cabinet Beau de Loménie
(86) International application number: PCT/JP2021/028753
(87) International publication number: WO 2022/030483

(57) **Abstract**

The present invention provides an anchor coating agent that has an appropriate viscosity, can reduce or inhibit the misting phenomenon, can be uniformly transferred in a required amount to a print medium, and can provide a coating film with excellent coating film durability. The present invention relates to an anchor coating agent containing: an emulsion; at least one of a cellulose ether or polyvinyl alcohol; and an aqueous medium.

## Description

### TECHNICAL FIELD

The present invention relates to anchor coating agents and methods for producing flexographic printed matters using the anchor coating agents.

### BACKGROUND ART

Flexographic printing is generally used in the field of packaging containers.

In recent years, in the field of packaging containers, the inkjet printing, which can reproduce high-quality designs, has drawn attention in terms of an increase in the added value.

The inkjet printing is known to include a pretreatment which includes application of an anchor coating agent containing a water-soluble polyvalent metal salt to a print medium.

For example, Patent Literature 1 discloses an anchor coating agent which is applied to a linerboard or cardboard and used in flexographic printing, the anchor coating agent containing a dissociable polyvalent metal salt, an emulsion, and an aqueous medium.

The anchor coating agent disclosed in Patent Literature 1 has a low viscosity, which may cause a misting phenomenon in which the anchor coating agent scatters in the form of a mist during printing. When the misting phenomenon occurs, the anchor coating agent in a required amount may fail to be transferred uniformly to the print medium.

The viscosity of the anchor coating agent disclosed in Patent Literature 1 can be increased by adding a thickener. However, the misting phenomenon derived from the thickener may occur, leaving room for further improvement.

### CITATION LIST

### - Patent Literature

Patent Literature 1: JP 2015-134914 A

### SUMMARY OF INVENTION

### - Technical Problem

The present invention aims to provide an anchor coating agent that has an appropriate viscosity, can reduce or inhibit the misting phenomenon, can be uniformly transferred in a required amount to a print medium, and can provide a coating film with excellent coating film durability.

### - Solution to Problem

The present inventors made intensive studies in view of the above issue, and found that an anchor coating agent containing an emulsion, at least one of a cellulose ether or polyvinyl alcohol, and an aqueous medium has an appropriate viscosity, can reduce or inhibit the misting phenomenon, can be uniformly transferred in a required amount to a print medium, and can form a coating film having excellent coating film durability. Thus, the present invention was completed.

Specifically, an anchor coating agent of the present invention contains: an emulsion, at least one of a cellulose ether or polyvinyl alcohol, and an aqueous medium.

In the anchor coating agent of the present invention, the cellulose ether preferably includes one or more selected from hydroxypropyl methyl cellulose and hydroxyethyl methyl cellulose.

The emulsion preferably has an acid value of less than 50 mgKOH/g.

The emulsion is preferably contained as a solid content in an amount of 5 to 65 mass% based on the total mass of the anchor coating agent.

The anchor coating agent of the present invention preferably further contains an ionic salt.

The ionic salt is preferably a calcium salt.

The ionic salt is preferably contained in an amount of 0.1 to 40 mass% based on the total mass of the anchor coating agent.

The anchor coating agent of the present invention is preferably for use in flexographic printing.

A method for producing a flexographic printed matter of the present invention is a method for producing a flexographic printed matter printed with a flexographic printer, the method including applying the anchor coating agent of the present invention to a print medium.

In the method for producing a flexographic printed matter of the present invention, the anchor coating agent is applied in an amount of preferably 0.1 to 10 g/m², more preferably 0.1 to 2 g/m².

Hereinafter, the anchor coating agent of the present invention and the method for producing a flexographic printed matter using the anchor coating agent will be described in detail.

### <Anchor coating agent>

The anchor coating agent of the present invention contains an emulsion, at least one of a cellulose ether or polyvinyl alcohol, and an aqueous medium.

### (Emulsion)

The anchor coating agent of the present invention contains an emulsion.

Examples of the emulsion include emulsions such as acrylic resins, polyester resins, polyurethane resins, polyvinyl acetate resins, polyvinyl chloride resins, polystyrene resins, and polybutadiene resins.

In particular, an acrylic resin emulsion is preferred in order to achieve excellent cohesiveness of the coating film of the anchor coating agent and suitably achieve coating film durability.

The emulsions can be used alone or in combination of two or more thereof.

The emulsion preferably has an acid value of less than 50 mgKOH/g.

When the acid value of the emulsion is 50 mgKOH/g or more, an interaction occurs between the emulsion and a later-described ionic salt, if present in the anchor coating agent, and the salting out tends to decrease. Thereby, the inkjet printability decreases. Further, the compatibility with the later-described ionic salt may be reduced, and thus storage stability may not be sufficiently achieved.

The emulsion more preferably has an acid value of 30 mgKOH/g or less, still more preferably 20 mgKOH/g or less in order to suitably achieve storage stability.

The acid value of the emulsion can be measured by the potentiometric titration method.

For example, it can be measured in accordance with JIS K 0070:1992 "Test methods for acid value, saponification value, ester value, iodine value, hydroxyl value and unsaponifiable matter of chemical products". A device used for such potentiometric titration may be an automatic potentiometric titrator AT-610 (available from Kyoto Electronics Manufacturing Co., Ltd.).

The emulsion preferably has a glass transition temperature of 70°C or lower, more preferably 40°C or lower in order to suitably achieve storage stability, still more preferably 20°C or lower in order to more suitably achieve coating film durability.

The lower limit of the glass transition temperature of the emulsion is preferably -10°C or higher, more preferably 0°C or higher in order to more suitably achieve storage stability.

The glass transition temperature of the emulsion can be measured by differential scanning calorimetry (DSC) in accordance with JIS K 7121:2012 "Testing Methods for Transition Temperatures of Plastics", for example.

The emulsion is preferably contained as a solid content in an amount of 5 to 65 mass% based on the total mass of the anchor coating agent.

When the emulsion content is less than 5 mass% as a solid content, the cohesive force of the coating film of the anchor coating agent may decrease, and thereby the coating film durability may decrease. When the emulsion content exceeds 65 mass% as a solid content, the proportions of other components added decrease, which may cause the effects of the invention to be insufficient.

In order to suitably achieve coating film durability, the emulsion is more preferably contained as a solid content in an amount of 6 mass% or more, still more preferably 7 mass% or more based on the total mass of the anchor coating agent. In order to suitably achieve storage stability, the emulsion is more preferably contained as a solid content in an amount of less than 30 mass%, still more preferably 15 mass% or less, particularly preferably 10 mass% or less, most preferably 9 mass% or less.

Examples of the emulsion include those obtained by emulsifying any of the resins exemplified above in a later-described aqueous medium using a low-molecular-weight emulsifier, those obtained by emulsifying any of the resins exemplified above in a later-described aqueous medium using a polymeric emulsifier, and those obtained by emulsifying any of the resins exemplified above in a later-described aqueous medium by self-emulsification.

Examples of the low-molecular-weight emulsifier include monosaccharide or polysaccharide fatty acid esters, polyglyceryl fatty acid esters, organic acid monoglycerides, propylene glycol fatty acid esters, polyglyceryl-condensed ricinoleic acid esters, sorbitan fatty acid esters, polyoxyethylene sorbitan fatty acid esters, polyoxyethylene alkyl ethers, alkylbenzene sulfonates, alkane sulfonates, α-olefin sulfonates, polyoxyethylene alkyl ether sulfates, alkyl sulfates, polyoxyethylene alkyl ether phosphates, tetraalkyl ammonium salts, alkyl benzyl dimethyl ammonium salts, fatty acid amidoamines, alkyl pyridinium salts, alkyl betaines, and alkyl amine oxides.

### (At least one of a cellulose ether or polyvinyl alcohol)

The anchor coating agent of the present invention contains at least one of a cellulose ether or polyvinyl alcohol.

In order to suitably achieve storage stability, the anchor coating agent of the present invention preferably contains a cellulose ether.

In the anchor coating agent of the present invention containing a cellulose ether, a large number of cyclic structures and a large number of hydroxy groups in the molecule are in a specific orientation state at the gas-liquid interface, which decreases the electrification of the mist generated during flexographic printing with the anchor coating agent to reduce or inhibit the misting phenomenon. Moreover, such an anchor coating agent has higher flowability to have higher transferability. However, the present invention is not necessarily construed as being limited to this functional mechanism.

Examples of the cellulose ether include: alkyl celluloses such as methyl cellulose, ethyl cellulose, and propyl cellulose; hydroxyalkyl celluloses such as hydroxyethyl cellulose and hydroxypropyl cellulose; hydroxyalkyl alkyl celluloses such as hydroxypropyl methyl cellulose and hydroxyethyl methyl cellulose; aralkyl celluloses such as benzyl cellulose and trityl cellulose; cyanoalkyl celluloses such as cyanoethyl cellulose; carboxyalkyl celluloses such as carboxymethyl cellulose and carboxyethyl cellulose; carboxyalkyl alkyl cellulose such as carboxymethyl methyl cellulose and carboxymethyl ethyl cellulose; and amino alkyl celluloses such as amino ethyl cellulose.

The cellulose ethers can be used alone or in combination of two or more thereof.

The cellulose ether preferably includes one or more selected from hydroxypropyl methyl cellulose and hydroxyethyl methyl cellulose, more preferably hydroxypropyl methyl cellulose.

Including one or more selected from hydroxypropyl methyl cellulose and hydroxyethyl methyl cellulose, the cellulose ether can suitably have solubility in a later-described aqueous medium, which enables more suitable achievement of storage stability. Use of hydroxyethyl methyl cellulose enables more suitable achievement of solubility in a later-described aqueous medium and storage stability.

In order to achieve appropriate viscosity of the anchor coating agent and reduce or inhibit the misting phenomenon and to allow uniform transferring of the anchor coating agent in a required amount to a print medium, the at least one of a cellulose ester or polyvinyl alcohol is preferably contained in an amount of 0.1 to 10 mass%, more preferably 0.2 to 5 mass%, still more preferably 1 to 3 mass% based on the total mass of the anchor coating agent.

The anchor coating agent of the present invention may contain a different thickener other than the at least one of a cellulose ether or polyvinyl alcohol as long as the effect of the present invention is not impaired.

Examples of the different thickener other than the at least one of a cellulose ether or polyvinyl alcohol include polyacrylic acid, (partially) neutralized polyacrylic acid, polyethylene glycol (and copolymers with other alkylene oxides), polyacrylamide (containing a substituent on a nitrogen atom), polyethyleneimine, dextrin, sodium alginate, polyvinylpyrrolidone, polyethylene oxide (and copolymers with other alkylene oxides), various sugars such as cellulose and glucose, ethylene-vinyl alcohol copolymers, and ethylene-acrylic acid copolymers (and neutralized products thereof).

In order to achieve appropriate viscosity of the anchor coating agent to reduce or inhibit the misting phenomenon, the at least one of a cellulose ether or polyvinyl alcohol is preferably contained in an amount of 80 mass% or more, more preferably 90 mass% or more, still more preferably 95 mass% or more, most preferably 100 mass% relative to the total mass of the thickeners (the at least one of a cellulose ether or polyvinyl alcohol and the different thickener other than the at least one of a cellulose ether or polyvinyl alcohol).

The "appropriate viscosity" herein means a viscosity at which the efflux time from a Zahn cup (#4, available from Rigo Co., Ltd.) is 8 to 35 seconds in measurement at a liquid temperature of 23°C.

### (Aqueous medium)

Examples of the aqueous medium include water and a mixture of water and a water-miscible solvent. Examples of the water-miscible solvent include lower alcohols, polyhydric alcohols, and alkyl ethers and alkyl esters thereof. Specific examples thereof include lower alcohols such as methanol, ethanol, n-propanol, isopropanol, butanol, isobutanol, and secondary butanol, polyhydric alcohols such as ethylene glycol, propylene glycol, diethylene glycol, dipropylene glycol, and glycerol, ethylene glycol monomethyl ether, ethylene glycol monoethyl ether, ethylene glycol monoacetate, propylene glycol monomethyl ether, propylene glycol monoethyl ether, propylene glycol monoacetate, diethylene glycol monomethyl ether, and dipropylene glycol monomethyl ether.

The aqueous media can be used alone or in combination of two or more thereof.

In order to suitably achieve flowability of the anchor coating agent and suitably impart abrasion resistance of the coating film formed from the anchor coating agent, the aqueous medium is preferably contained in an amount of 10 to 50 mass%, more preferably 20 to 40 mass%, based on the total mass of the anchor coating agent.

The aqueous medium content is the sum of the amount of the aqueous medium in the emulsion and the amount of the aqueous medium other than the aqueous medium in the emulsion.

### (Ionic salt)

The anchor coating agent of the present invention preferably further contains an ionic salt.

The anchor coating agent of the present invention further containing an ionic salt forms a coating film containing the ionic salt, which allows suitable exertion of the salting out so that components in the ink such as pigments and binder resins are less likely to permeate into base paper in inkjet printing, resulting in excellent Inkjet printability.

Examples of the ionic salt include organic ionic salts and inorganic ionic salts.

Examples of the organic ionic salts include aliphatic sulfonates, higher alcohol sulfates, higher alcohol phosphates, higher alcohol ethylene oxide adduct sulfates, higher alcohol ethylene oxide adduct phosphates, quaternary ammonium salts, and betaine.

Examples of the inorganic ionic salts include alkali metal salts and alkaline earth metal salts. In particular, a dissociable polyvalent metal salt is preferred in order to suitably achieve inkjet printability.

Examples of the dissociable polyvalent metal salt include inorganic salts such as chlorides, sulfates, and nitrates of substances, e.g., calcium and magnesium, and organic acid salts such as acetates and formates of substances e.g., calcium and magnesium.

Specific examples thereof include calcium acetate, calcium chloride, calcium formate, calcium nitrate, calcium sulfate, magnesium acetate, magnesium chloride, magnesium formate, magnesium nitrate, and magnesium sulfate.

The ionic salts can be used alone or in combination of two or more thereof.

The ionic salt is preferably a calcium salt.

When the ionic salt is a calcium salt, solubility in the above-described aqueous medium can be suitably achieved.

The ionic salt is more preferably calcium chloride or calcium nitrate. In order to achieve suitable exertion of the salting out to more suitably achieve inkjet printability, still more preferred is calcium chloride.

In order to suitably achieve inkjet printability, the ionic salt is preferably contained in an amount of 0.1 to 40 mass%, more preferably 2 to 20 mass%, still more preferably 5 to 15 mass%, based on the total mass of the anchor coating agent.

### (Others)

The anchor coating agent of the present invention preferably contains polyolefin wax in order to suitably impart coating film durability.

Examples of the polyolefin wax include waxes produced from an olefin such as ethylene, propylene, or butylene or from a derivative thereof, and copolymers thereof.
Specific examples thereof include polyethylene waxes, polypropylene waxes, and polybutylene waxes.

In particular, polyethylene waxes are preferred in order to more suitably impart coating film durability to the coating film of the anchor coating agent.

The polyolefin wax may be a commercially available one such as Nopcote PEM17 (available from San Nopco Limited), CHEMIPEARL W400, CHEMIPEARL W4005 (available from Mitsui Chemicals, Inc.), AQUACER 515, or AQUACER 593 (available from BYK Japan KK).

The polyolefin wax contained in the anchor coating agent of the present invention is preferably 0.1 to 10 mass%, more preferably 0.2 to 5 mass%, based on the total mass of the anchor coating agent.

The anchor coating agent of the present invention containing the components described above may also contain various appropriately selected known additives such as a dispersant, a dispersion aid, a wetting agent, a viscosity modifier, a pH adjuster, a defoaming agent, an antifungal agent, an antirust agent, and a leveling agent.

### (Method for producing the anchor coating agent)

The method for producing the anchor coating agent of the present invention may be any method that includes, for example, kneading the above-described components and optionally added additives.

### <Method for producing a flexographic printed matter>

A method for producing a flexographic printed matter of the present invention is a method for producing a flexographic printed matter printed with a flexographic printer, the method including applying the anchor coating agent of the present invention to a print medium.

The print medium is not limited, and may be, for example, a linerboard obtainable by appropriately mixing one or more of chemical pulps, mechanical pulps, and wastepaper pulps. In addition, a linerboard having a multilayer structure obtainable by combining two or more pulp layers can also be used.

The anchor coating agent of the present invention can be used in printing by a known printing method. Still, the anchor coating agent of the present invention is preferably used in flexographic printing.

The anchor coating agent of the present invention can suitably reduce or inhibit the misting phenomenon that is particularly likely to occur during flexographic printing.

A known flexographic printing method appropriately selected can be used.

The anchor coating agent is preferably applied in an amount of 0.1 to 20 g/m² as a solid content, more preferably 0.1 to 15 g/m² as a solid content in order to suitably achieve coating film durability.

When the anchor coating agent of the present invention is applied in an amount of less than 0.1 g/m², the effect of the present invention may not be sufficiently achieved. When the anchor coating agent is applied in an amount of more than 20 g/m², back trapping may easily occur, and coating film durability may not be sufficiently achieved.

The coated surface which is coated with the anchor coating agent may be dried with a general dryer used in this field, such as a hot air dryer. The coated surface which is coated with the anchor coating agent may be in a completely dried state or a semi-dried state.

On a flexographic printed matter formed by applying the anchor coating agent can be formed a printed layer formed by a known printing method using a known ink.

Examples of the known printing method include gravure printing, offset printing, flexographic printing, screen printing, and inkjet printing. Preferred is inkjet printing which can reproduce high-quality designs.

The flexographic printed matter produced by the method for producing a flexographic printed matter of the present invention is formed using the anchor coating agent of the present invention, and therefore has excellent coating film durability.

### - Advantageous Effects of Invention

The present invention can provide an anchor coating agent that has an appropriate viscosity, can reduce or inhibit the misting phenomenon, can be uniformly transferred in a required amount to a print medium, and provide a coating film with excellent coating film durability.

### DESCRIPTION OF EMBODIMENTS

Hereinafter, the present invention will be described in more detail with reference to examples below, but the present invention is not limited to these examples. Unless otherwise specified, "%" means "mass%" and "part(s)" means "part(s) by mass".

The raw materials used in the examples and comparative examples are listed below.

### <Ionic salt>

Calcium chloride dihydrate
Calcium nitrate tetrahydrate

### <Emulsion>

### (Acrylic resin emulsion-1)

FX2043 (available from Nippon Carbide Industries Co., Inc., acid value: 10 mgKOH/g, glass transition temperature: 10°C, solid content: 50 mass%, aqueous medium: water)
Other acrylic resin emulsions were prepared by the following procedure.

### (Acrylic resin emulsion-2)

To a mixture of monomers consisting of 1.5 parts by mass of acrylic acid, 89.5 parts by mass of methyl methacrylate, and 9 parts by mass of butyl acrylate were added 3 parts by mass of Aqualon HS-10 (available from DKS Co., Ltd.) as a surfactant and an aqueous solution obtained by dissolving 0.3 parts by mass of potassium persulfate in 46 parts by mass of distilled water. The mixture was emulsified in advance with a stirrer. A polymerization vessel equipped with a stirrer, a condenser, a thermometer, and a nitrogen introduction tube was charged with 20 parts by mass of distilled water and then purged with nitrogen. When the temperature of the vessel was raised to 80°C, the above emulsion of the monomers was added dropwise over three hours and the resulting mixture was further reacted for two hours, whereby the polymerization was completed. Here, a small amount of potassium persulfate was added at the late stage of the polymerization to consume the residual monomers. To the obtained emulsion was added sodium hydroxide to adjust the pH of the emulsion to 7. Thereafter, distilled water was added so that the solid concentration was 50 mass%. Thereby, an acrylic resin emulsion-2 (acid value: 10 mg KOH/g, glass transition temperature: 70°C, solid content: 50 mass%, aqueous medium: water) was obtained.

### (Acrylic resin emulsion-3)

The synthesis was carried out as in the synthesis of acrylic resin emulsion-2, except that the amount of acrylic acid was changed to 19.3 parts by mass, the amount of methyl methacrylate was changed to 34.5 parts by mass, and the amount of butyl acrylate was changed to 46.2 parts by mass. Thereby, an acrylic resin emulsion-3 (acid value: 150 mgKOH/g, glass transition temperature: 10°C, solid content: 50% by mass, aqueous medium: water) was obtained.

### <Cellulose ether>

Cellulose ether A (Hydroxypropyl methyl cellulose, METOLOSE 90SH-100, available from Shin-Etsu Chemical Co., Ltd.)
Cellulose ether B (Hydroxypropyl methyl cellulose, METOLOSE 60SH-400, available from Shin-Etsu Chemical Co., Ltd.)
Cellulose ether C (carboxymethyl cellulose, available from Daicel Corporation, CMC1140)
Cellulose ether D (Hydroxyethyl methyl cellulose, METOLOSE 60SEB, available from Shin-Etsu Chemical Co., Ltd.)

### <Polyvinyl alcohol>

Polyvinyl alcohol (PVA224, available from Kuraray Co., Ltd.)

### <Different thickener>

Polyethylene oxide (ALKOX R-400, available from Meisei Chemical Works, Ltd.)

### <Aqueous medium>

purified water

### <Others>

Polyethylene wax (CHEMIPEARL W-400, available from Mitsui Chemicals, Inc.)
Leveling agent (SURFYNOL 104, available from Nissin Chemical Industry Co., Ltd.)
Defoaming agent (Antifoam 013A, available from Dow Toray Co., Ltd.)

### (Examples 1 to 15, Comparative Examples 1 to 3)

Materials were kneaded at the compounding ratio shown in Table 1 to prepare an anchor coating agent.

### <Measurement of viscosity>

The viscosity was measured using a Zahn cup (#4, available from Rigo Co., Ltd.) at a liquid temperature of 23°C. Table 1 shows the results.

### <Transferability>

The anchor coating agents prepared in the examples and comparative examples were each applied to coated cardboard (available from Rengo Co., Ltd., basis weight: 230 g/m²) to a solid content of 0.5 g/m² using a hand proofer (360 lines), and the coated surface was dried with a dryer.

The coated surface was visually observed, and the transfer state of the anchor coating agent was evaluated based on the following criteria. Table 1 shows the results. Good: transfer was uniform, which had no influence on printing with an inkjet ink.
Acceptable: transfer was partly not uniform, which however had no influence on printing with an inkjet ink.
Poor: transfer was not uniform or not in a required amount, which caused troubles in printing with an inkjet ink.

### <Misting>

Printing was performed on coated cardboard (available from Rengo Co., Ltd., basis weight: 230 g/m²) with the anchor coating agents prepared in the examples and comparative examples, using a stack-type flexo printer (Orient Sogyo Co., Ltd.) at a printing speed of 150 m/min.

The degree of scattering of the anchor coating agent during the flexographic printing was visually evaluated. Table 1 shows the results.
Good: no scattering at all.
Acceptable: although scattering of the anchor coating agent was observed, the appearance was not damaged and there was no concern about the impact on the equipment, which did not require stopping of the printer.
Poor: scattering of the anchor coating agent was observed, and the appearance was damaged or there was concern about the impact on the equipment, which required stopping and cleaning of the printer.

### <Coating film durability>

The anchor coating agents prepared in the examples and comparative examples were each applied to coated cardboard (available from Rengo Co., Ltd., basis weight: 230 g/m²) to a solid content of 0.5 g/m² using a hand proofer (360 lines), and the coated surface was dried with a dryer.

Using a Gakushin-type rubbing fastness tester (available from Toyo Seiki Seisaku-sho, Ltd.), the coating film durability was evaluated under the following conditions. Table 1 shows the results.

Evaluation conditions: 200 g × twice, paper attached: a canequim cloth to which 5 drops of water were dripped Good: no coating film removal was observed.
Acceptable: the anchor coating agent slightly adhered to the paper.
Poor: the anchor coating agent adhered to the entire surface of the paper.

### <Inkjet printability>

The anchor coating agents prepared in the examples and comparative examples were each applied to coated cardboard (available from Rengo Co., Ltd., basis weight: 230 g/m²) to a solid content of 0.5 g/m² using a hand proofer (360 lines), and the coated surface was dried with a dryer.

On each of the obtained coated surfaces were printed 0.3-mm thin lines by an inkjet printer (PX105, available from Seiko Epson Corporation) using an inkjet ink (IC4CL69, available from Seiko Epson Corporation).

The printed surface was visually observed, and the inkjet printability was evaluated based on the following criteria. Table 1 shows the results.
Good: the printing was clear and there was no bleeding. Acceptable: there was slight bleeding in the printing, but the design was reproduced.
Poor: there was a lot of bleeding in the printing, and the design was difficult to see.

### <Solubility>

The materials were blended at the mass ratio shown in Table 1 so that the viscosity measured using a Zahn cup (#4, available from Rigo Co., Ltd.) at a liquid temperature of 23°C was 10 seconds or more, and the solubility of the materials was evaluated based on the following criteria. Table 1 shows the results.
Good: all materials were dissolved and there was no residue. Acceptable: some materials remained undissolved, which could be removed with a filter (100 mesh).
Poor: the materials were poorly soluble and the viscosity could not be increased to 10 seconds or more, or the amount of residue was so large that it could not be removed with a filter (100 mesh).

### <Storage stability>

The anchor coating agents prepared in the examples and comparative examples were stored in a closed container at 40°C for seven days, and the presence or absence of thickening, separation, and sedimentation was checked and evaluated based on the following criteria. Table 1 shows the results.
Good: no viscosity increase, separation, or sedimentation was observed.
Acceptable: viscosity increase, separation or sedimentation was observed, but it was completely recovered by stirring. Poor: viscosity increase, separation, or sedimentation was observed, and it could not be completely recovered by stirring.

**[Table 1a]**

| | | Example | | | | | | | |
|---|---|---|---|---|---|---|---|---|---|
| | | 1 | 2 | 3 | 4 | 5 | 6 | 7 | 8 |
| Emulsion | Acrylic resin emulsion-1 | 10.0 | 10.0 | 100 | 10.0 | 10.0 | 2.0 | 20.0 | 10.0 |
| | Acrylic resin emulsion-2 | - | - | - | - | - | - | - | - |
| | Acrylic resin emulsion-3 | - | - | - | - | - | - | - | - |
| Cellulose ether | A | 1.5 | 0.2 | 5.0 | 1.5 | 1.5 | 1.5 | 1.5 | - |
| | B | - | - | - | - | - | - | - | 1.5 |
| | C | - | - | - | - | - | - | - | - |
| | D | - | - | - | - | - | - | - | - |
| Polyvinyl alcohol | | - | - | - | - | - | - | - | - |
| Different thickener | Polyethylene oxide | - | - | - | - | - | - | - | - |
| Aqueous medium | Purified water | 75.9 | 77.2 | 72.4 | 83.9 | 65.9 | 83.9 | 65.9 | 75.9 |
| Ionic salt | Calcium chloride dihydrate | 10.0 | 10.0 | 10.0 | 2.0 | 20.0 | 10.0 | 10.0 | 10.0 |
| | Calcium nitrate tetrahydrate | - | - | - | - | - | - | - | - |
| Others | Polyethylene wax | 2.0 | 2.0 | 2.0 | 2.0 | 2.0 | 2.0 | 2.0 | 2.0 |
| | Leveling agent | 0.3 | 0.3 | 0.3 | 0.3 | 0.3 | 0.3 | 0.3 | 0.3 |
| | Defoaming agent | 0.3 | 0.3 | 0.3 | 0.3 | 0.3 | 0.3 | 0.3 | 0.3 |
| Total (mass%) | | 100.0 | 100.0 | 100.0 | 100.0 | 100.0 | 100.0 | 100.0 | 100.0 |
| Viscosity | | 15s | 8s | 30s | 15s | 15s | 10s | 20s | 20s |
| Transferability | | Good | Acceptable | Good | Good | Good | Good | Good | Good |
| Misting | | Good | Acceptable | Good | Good | Good | Good | Good | Good |
| Coating film durability | | Good | Good | Good | Good | Acceptable | Acceptable | Good | Good |
| Inkjet printability | | Good | Good | Good | Acceptable | Good | Good | Good | Good |
| Solubility | | Good | Good | Acceptable | Good | Good | Good | Good | Acceptable |
| Storage stability | | Good | Good | Acceptable | Good | Acceptable | Good | Acceptable | Acceptable |

**[Table 1b]**

| | | Example | | | | | | |
|---|---|---|---|---|---|---|---|---|
| | | 9 | 10 | 11 | 12 | 13 | 14 | 15 |
| Emulsion | Acrylic resin emulsion-1 | 10.0 | - | 10.0 | 10.0 | - | 10.0 | 10.0 |
| | Acrylic resin emulsion-2 | - | 10.0 | - | - | - | - | - |
| | Acrylic resin emulsion-3 | - | - | - | - | 10.0 | - | - |
| Cellulose ether | A | 1.5 | 1.5 | 1.5 | - | 1.5 | - | - |
| | B | - | - | - | - | - | - | - |
| | C | - | - | - | 1.5 | - | - | - |
| | D | - | - | - | - | - | - | 1.5 |
| Polyvinyl alcohol | | - | - | - | - | - | 1.5 | - |
| Different thickener | Polyethylene oxide | - | - | - | - | - | - | - |
| Aqueous medium | Purified water | 75.9 | 75.9 | 85.9 | 75.9 | 75.9 | 75.9 | 75.9 |
| Ionic salt | Calcium chloride dihydrate | - | 10.0 | - | 10.0 | 10.0 | 10.0 | 10.0 |
| | Calcium nitrate tetrahydrate | 10.0 | - | - | - | - | - | - |
| Others | Polyethylene wax | 2.0 | 2.0 | 2.0 | 2.0 | 2.0 | 2.0 | 2.0 |
| | Leveling agent | 0.3 | 0.3 | 0.3 | 0.3 | 0.3 | 0.3 | 0.3 |
| | Defoaming agent | 0.3 | 0.3 | 0.3 | 0.3 | 0.3 | 0.3 | 0.3 |
| Total (mass%) | | 100.0 | 100.0 | 100.0 | 100.0 | 100.0 | 100.0 | 100.0 |
| Viscosity | | 15s | 15s | 15s | 8s | 15s | 15s | 30s |
| Transferability | | Good | Good | Good | Acceptable | Good | Good | Good |
| Misting | | Good | Good | Good | Good | Good | Good | Good |
| Coating film durability | | Good | Acceptable | Good | Good | Good | Good | Good |
| Inkjet printability | | Acceptable | Good | Poor | Good | Good | Good | Good |
| Solubility | | Good | Good | Good | Poor | Acceptable | Acceptable | Acceptable |
| Storage stability | | Good | Acceptable | Good | Acceptable | Poor | Poor | Acceptable |

**[Table 1c]**

| | | Comparative Example | | |
|---|---|---|---|---|
| | | 1 | 2 | 3 |
| Emulsion | Acrylic resin emulsion-1 | 10.0 | - | 10.0 |
| | Acrylic resin emulsion-2 | - | - | - |
| | Acrylic resin emulsion-3 | - | - | - |
| Cellulose ether | A | - | 1.5 | - |
| | B | - | - | - |
| | C | - | - | - |
| | D | - | - | - |
| Polyvinyl alcohol | | - | - | - |
| Different thickener | Polyethylene oxide | - | - | 1.5 |
| Aqueous medium | Purified water | 77.4 | 85.9 | 75.9 |
| Ionic salt | Calcium chloride dihydrate | 10.0 | 10.0 | 10.0 |
| | Calcium nitrate tetrahydrate | - | - | - |
| Others | Polyethylene wax | 2.0 | 2.0 | 2.0 |
| | Leveling agent | 0.3 | 0.3 | 0.3 |
| | Defoaming agent | 0.3 | 0.3 | 0.3 |
| Total (mass%) | | 100.0 | 100.0 | 100.0 |
| Viscosity | | 7s | 10s | 15s |
| Transferability | | Poor | Good | Good |
| Misting | | Acceptable | Good | Poor |
| Coating film durability | | Good | Poor | Good |
| Inkjet printability | | Good | Good | Good |
| Solubility | | Good | Good | Good |
| Storage stability | | Good | Good | Good |

The anchor coating agents according to the examples were confirmed to have an appropriate viscosity, can reduce or inhibit the misting phenomenon, can be uniformly transferred in a required amount to a print medium, and can provide a coating film having excellent coating film durability.

Comparison between Example 1 and Example 11 shows that containing an ionic salt improves the inkjet printability.

Comparison between Example 1 and Examples 12 and 14 shows that the use of hydroxypropyl methyl cellulose can more suitably impart solubility and storage stability.

Comparison between Example 1 and Example 13 shows that setting the acid value of the emulsion within a predetermined range can more suitably impart solubility and storage stability.

Example 15 shows that the use of hydroxyethyl methyl cellulose can impart appropriate viscosity to the anchor coating agent, and that such an agent has excellent transferability and can reduce or inhibit the misting phenomenon, providing a coating film excellent in coating film durability and inkjet printability.

In Comparative Example 1 in which no thickener was contained, the viscosity was insufficient and the transferability was also poor. In Comparative Example 2 in which no emulsion was contained, the coating film durability was poor. In Comparative Example 3 in which polyethylene oxide was used as a thickener, the misting phenomenon could not be inhibited.

### INDUSTRIAL APPLICABILITY

The present invention can provide an anchor coating agent that has an appropriate viscosity, can reduce or inhibit a misting phenomenon, can be uniformly transferred in a required amount to a print medium, and can provide a coating film with excellent coating film durability.

## Claims

1. An anchor coating agent comprising:
an emulsion;
at least one of a cellulose ether or polyvinyl alcohol; and
an aqueous medium.

2. The anchor coating agent according to claim 1,
wherein the cellulose ether includes one or more selected from hydroxypropyl methyl cellulose and hydroxyethyl methyl cellulose.

3. The anchor coating agent according to claim 1 or 2,
wherein the emulsion has an acid value of less than 50 mgKOH/g.

4. The anchor coating agent according to any one of claims 1 to 3,
wherein the emulsion is contained as a solid content in an amount of 5 to 65 mass% based on the total mass of the anchor coating agent.

5. The anchor coating agent according to any one of claims 1 to 4, further comprising an ionic salt.

6. The anchor coating agent according to claim 5,
wherein the ionic salt is a calcium salt.

7. The anchor coating agent according to claim 5 or 6,
wherein the ionic salt is contained in an amount of 0.1 to 40 mass% based on the total mass of the anchor coating agent.

8. The anchor coating agent according to any one of claims 1 to 7, which is for use in flexographic printing.

9. A method for producing a flexographic printed matter printed with a flexographic printer, the method comprising
applying the anchor coating agent according to any one of claims 1 to 8 to a print medium.

10. The method for producing a flexographic printed matter according to claim 9,
wherein the anchor coating agent is applied in an amount of 0.1 to 10 g/m² as a solid content.

11. The method for producing a flexographic printed matter according to claim 10,
wherein the anchor coating agent is applied in an amount of 0.1 to 2 g/m² as a solid content.
